# DEMANDE DE BREVET EUROPEEN

(11) **EP 3 594 509 A1**
(43) Date de publication de la demande: **15.01.2020**
(21) Numéro de dépôt: 19184636.9
(22) Date de dépôt: 05.07.2019
(51) Int. Cl.: F15B 11/042, B60P 1/64

(54) **DISPOSITIF DE LEVAGE COMPRENANT UN CIRCUIT HYDRAULIQUE PERFECTIONNÉ POUR AUTORISER UNE PHASE DE RETOUR BENNAGE RAPIDE**

(30) Priorité: 05.07.2018 FR 1856187
(71) Demandeur: Guima Palfinger S.A.S., 82300 Caussade (FR)
(72) Inventeur: VERDIER, Céline, 82410 Saint Etienne de Tulmont (FR); RAUCOULES, Michel, 82440 Realville (FR)
(74) Mandataire: Regimbeau

(57) **Abrégé**

La présente invention concerne un dispositif de levage destiné à être placé sur un châssis et comprenant une potence actionnée par au moins un vérin (100, 110) alimenté par l'intermédiaire de moyens de commande par une source de pression (130) pour opérer successivement un chargement ou bennage et un déchargement ou retour bennage, caractérisé par le fait que la source de pression (130) est adaptée pour générer sélectivement deux débits d'alimentation du vérin (100, 110), des moyens pour permettre de sélectionner sélectivement un régime de débit élevé lors d'une phase de retour bennage et qu'il comprend des moyens (150) formant limiteur de pression en sortie de la source de pression (130) en régime haut de débit sélectionné, ainsi qu'un module (200) assurant une fonction d'équilibrage et de maintien de la charge entraînante.

## Description

### DOMAINE TECHNIQUE

L'invention concerne le domaine des dispositifs de manutention actionnés par vérin hydraulique.

L'invention s'applique en particulier aux dispositifs de levage, chargement/déchargement et bennage/retour bennage, actionnés par vérin hydraulique.

### ETAT DE LA TECHNIQUE

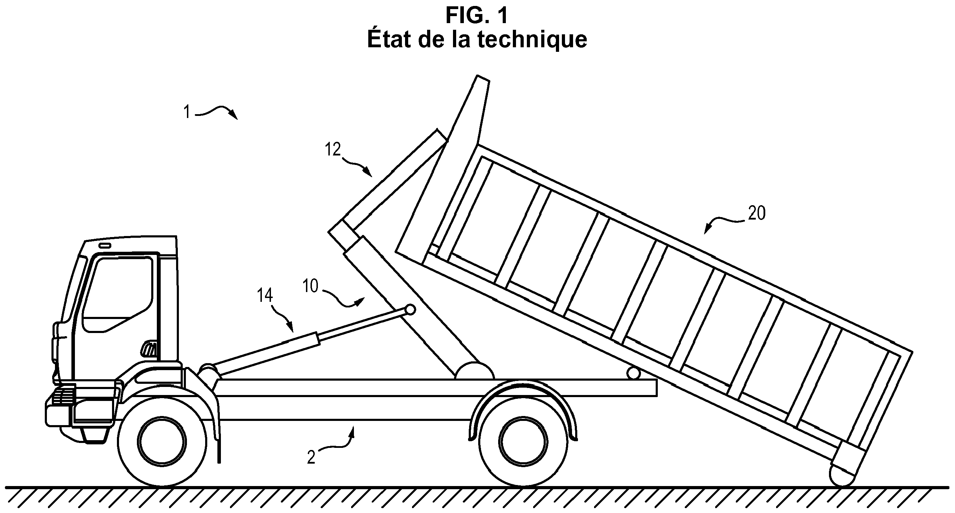

L'invention s'applique notamment aux dispositifs de bennage/retour bennage du type illustré schématiquement sur la figure 1 annexée.

On aperçoit sur la figure 1 un dispositif de levage 10 disposé sur le châssis 2 d'un camion 1 et comprenant une potence 12 actionnée par au moins un vérin 14 pour opérer successivement le chargement ou bennage d'une benne ou caisson 20 sur le châssis 2 du camion et le déchargement ou retour bennage de la benne ou caisson 20.

La structure générale d'un tel dispositif de levage est connue en soit et ne sera pas décrite dans le détail par la suite.

Des systèmes de levage du type précédemment décrits en regard de la figure 1 sont notamment fabriqués et commercialisés par la société GUIMA PALFINGER depuis de nombreuses années.

La structure générale de tels dispositifs de levage est décrite par exemple, et non limitativement, dans les documents EP-0194954, FR-2185520, FR-2315409.

Les systèmes de levage peuvent faire l'objet de nombreuses variantes entrant dans le cadre de l'invention.

On citera de manière non limitative des variantes de dispositifs de levage comprenant une potence articulée pour permettre un angle de chargement réduit, ce qui évite notamment un glissement de la charge dans la benne ou encore un chargement/déchargement sur une hauteur disponible réduite, par exemple sous plafond.

On connaît également des variantes de dispositifs de levage dans lesquelles la potence est articulée à sa base sur un châssis central articulé lui-même sur un basculeur monté sur le véhicule.

Dans certains cas, le châssis central peut lui-même être articulé sous forme de deux éléments constitutifs reliés par un axe de rotation contrôlé par des moyens de verrouillage.

De telles structures sont décrites par exemple dans les documents EP 1932717, DE-19637891, DE-3332275 et EP-2570301.

On connaît encore des dispositifs de levage dans lesquels la potence ou le châssis central est télescopique pour une adaptation à des bennes de longueur différente.

Depuis de nombreuses années est apparue une forte demande de pouvoir disposer de moyens permettant de commuter la vitesse de bennage/retour bennage sélectivement entre deux vitesses.

Selon les conditions d'utilisation et notamment la charge de la benne, l'exploitant peut en effet ou non sélectionner une vitesse de déplacement rapide de la benne afin d'optimiser ces temps d'intervention.

Différentes tentatives de solution ont déjà été proposées à cet effet.

Un premier exemple de proposition a été formulé en 2005. Il est décrit dans le document EP-1600643. Cette proposition qui vise un dispositif d'entraînement hydraulique mettant en oeuvre deux vérins, consiste à proposer un dispositif de commande agencé pour, dans un mode de fonctionnement rapide, relier la chambre de vérin qui se réduit en volume d'un vérin maître délivrant le fluide hydraulique à la chambre de vérin qui s'expanse d'un vérin esclave, en raison du déplacement du piston et recevant du fluide hydraulique, et réduire ou éventuellement bloquer l'écoulement du fluide hydraulique depuis la chambre de vérin du vérin maître délivrant le fluide hydraulique vers une bâche ou collecteur de fluide hydraulique.

En 2011, on a tenté d'améliorer ces dispositifs en proposant, comme décrit dans le document EP-2570301 un procédé d'abaissement d'un châssis basculant ou « basculeur » comprenant un vérin différentiel à double effet permettant le déplacement du basculeur, dans lequel le procédé comprend les étapes consistant à connecter hydrauliquement une chambre située du côté du fond du cylindre différentiel à double effet à une chambre située du côté de la tige dudit vérin et contrôler la circulation du fluide hydraulique provenant de la chambre située du côté du fond vers la chambre située du côté de la tige en permettant à une partie du fluide hydraulique de s'écouler à travers une vanne de contrôle d'écoulement dans un réservoir, complété par la surveillance de l'angle de basculement de l'élévateur et le contrôle de la circulation du fluide hydraulique s'écoulant dans le réservoir en fonction de l'angle de basculement.

Depuis 2011 le domaine n'a pas connu d'évolution notoire.

### BASE DE L'INVENTION

Dans ce contexte, la présente invention a pour but de proposer de nouveaux moyens permettant d'améliorer les performances de dispositifs de levage, chargement/déchargement et bennage/retour bennage actionnés par vérin hydraulique, en proposant de nouveaux moyens adaptés pour permettre de commuter sélectivement les vitesses de déplacement du ou des vérin(s) d'actionnement lors d'une phase de retour bennage.

Ce but est atteint selon l'invention grâce à un dispositif de levage destiné à être placé sur un châssis et comprenant une potence actionnée par au moins un vérin hydraulique alimenté par l'intermédiaire de moyens de commande par une source de pression, pour opérer successivement un chargement ou bennage et un déchargement ou retour bennage, caractérisé par le fait que la source de pression est adaptée pour générer sélectivement deux débits d'alimentation du vérin, des moyens pour permettre de sélectionner sélectivement un régime de débit élevé lors d'une phase de retour bennage et qu'il comprend des moyens formant limiteur de pression en sortie de la source de pression, actifs lors de l'application du régime de débit le plus élevé, ainsi qu'un module assurant une fonction d'équilibrage et de maintien de la charge entraînante.

La possibilité de sélectionner l'un ou l'autre des deux débits permet une commutation simple de la vitesse d'actionnement du vérin et notamment d'augmenter la vitesse de rentrée du vérin dans le cas où la charge est entraînante lors d'une phase de retour bennage.

Le limiteur de pression, actif lors de l'application du régime de débit le plus élevé, permet de contrôler la puissance maximale requise par la source de pression et notamment de ne pas dépasser le couple maximal disponible sur la prise de mouvement disponible sur le véhicule pour entraîner l'axe principal de la pompe constituant la source de pression.

Les documents GB 714 605 et GB 801 006 évoquent des moyens permettant de limiter la pression sur des circuits d'alimentation de vérins hydrauliques susceptibles de fonctionner à des régimes de pression différents. Cependant bien que l'enseignement de ces documents soit connu depuis plus de 50 ans, comme indiqué précédemment personne n'a jusqu'ici imaginer d'évolution notoire depuis 2011 dans le domaine de la manutention de bennes et en particulier n'avait envisagé d'intégrer une option entre deux régimes de débit associée à un limiteur de pression en régime de débit le plus élevé, dans un système de chargement et déchargement de benne.

Selon d'autres caractéristiques avantageuses mais optionnelles de l'invention :
- le dispositif comprend deux vérins hydrauliques montés en parallèle,
- le dispositif comprend un distributeur hydraulique commutable entre trois positions, une position de repos dans laquelle le distributeur interrompt l'alimentation du vérin, une première position de travail correspondant à un premier sens d'actionnement du vérin et une deuxième position de travail correspondant à un sens d'actionnement opposé du vérin, ainsi que des moyens adaptés pour permettre de passer un débit parallèle au distributeur ce qui permet de passer vers le vérin un débit que le distributeur ne permet pas,
- le dispositif comprend deux valves deux voies/deux positions respectivement sur une ligne allée en sortie de la source de pression et sur une ligne de retour communiquant avec un réservoir,
- la source de pression est une pompe à cylindrée fixe mais débit variable en fonction de sa vitesse de rotation,
- la source de pression est une pompe à double cellule de cylindrée fixe et double débit et le dispositif comprend des moyens qui permettent de commuter le débit de sortie de l'une des deux cellules, soit vers un vérin, soit vers un réservoir,
- la source de pression est une pompe à cylindrée variable,
- le limiteur de pression comprend un capteur de pression placé sur une ligne de sortie de la source de pression,
- le limiteur de pression est formé d'un limiteur hydraulique disposé entre une sortie de la source de pression et un réservoir.

L'invention concerne également les véhicules équipés d'un dispositif du type précité.

L'invention concerne par ailleurs un procédé de commande d'un dispositif de levage destiné à être placé sur un châssis et comprenant une potence actionnée par au moins un vérin hydraulique alimenté par une source de pression, pour opérer successivement un chargement ou bennage et un déchargement ou retour bennage, caractérisé par le fait qu'il comprend des étapes consistant à sélectionner l'un de deux régimes de débit d'alimentation du vérin en sélectionnant sélectivement un régime de débit élevé lors d'une phase de retour bennage, à limiter la pression en sortie de la source de pression lors de l'application du régime de débit le plus élevé et à opérer un contrôle de charge entraînante à l'aide d'un module assurant une fonction d'équilibrage et de maintien de la charge entraînante.

### DESCRIPTIF RAPIDE DES FIGURES

- la figure 1 précédemment décrite représente la structure générale d'un dispositif de levage connu en soi de l'état de la technique, équipant un châssis d'un véhicule,
- la figure 2 représente un premier mode de réalisation d'un circuit hydraulique d'alimentation d'un vérin d'actionnement d'un tel dispositif de levage, conforme à la présente invention,
- la figure 3 représente un deuxième mode de réalisation conforme à l'invention d'un circuit hydraulique d'alimentation d'un vérin d'actionnement d'un dispositif de levage, et
- la figure 4 représente un troisième mode de réalisation d'un circuit hydraulique conforme à la présente invention d'alimentation de vérin actionnant un dispositif de levage.

### DESCRIPTIF DETAILLE DE L'INVENTION

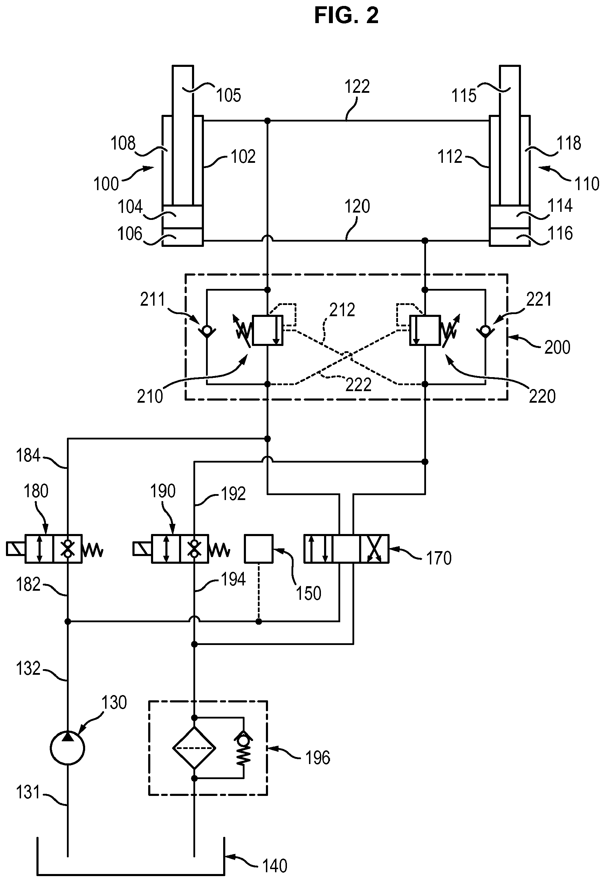

On aperçoit sur les figures 2, 3 et 4 annexées des schémas hydrauliques qui comprennent deux vérins 100, 110 placés en parallèle, des moyens formant une source de pression de fluide hydraulique 130 et des moyens 150 formant limiteur de pression.

Chaque vérin 100, 110 comprend un cylindre 102, 112 qui loge un piston 104, 114 lié à une tige 105, 115.

Une chambre principale 106, 116 pour chaque vérin est formée d'un côté du piston 104, 114.

Chaque vérin 100, 110 comprend une chambre auxiliaire 108, 118 placée du côté opposé du piston 104, 114.

Quand la chambre principale 106, 116 est alimentée par un débit de fluide et/ou la chambre auxiliaire 108, 118 est mise en dépression, la chambre principale 106, 116 s'expanse tandis que la chambre auxiliaire 108, 118 se rétracte, de sorte que le piston 104, 114 sollicite la tige 105, 115 en sortie.

Inversement, quant la chambre principale 106, 116 est mise en dépression et/ou que la chambre auxiliaire 108, 118 est alimentée par un débit de fluide, la chambre principale 106, 116 se rétracte tandis que la chambre auxiliaire 108, 118 s'expanse, le piston 104, 114 sollicite alors la tige 105, 115 dans le sens d'une rétractation.

Les chambres principales 106, 116 des vérins 100, 110 sont connectées en parallèle par une ligne 120.

Les chambres auxiliaires 108, 118 des vérins 100, 110 sont connectées entre elles par une ligne 122.

On aperçoit également sur les figures 2, 3 et 4 annexées, une bâche ou réservoir 140 de fluide.

Comme on le voit sur les figures 2, 3 et 4, le circuit hydraulique conforme à l'invention comprend également un distributeur 170 adapté pour contrôler l'alimentation des vérins 100, 110.

Le distributeur 170 est typiquement un distributeur à trois positions.

En position neutre du distributeur 170, les vérins 100, 110 ne sont pas alimentés.

Dans une première position de travail, le distributeur 170 alimente les chambres principales 106, 116 des vérins 100, 110 en débit de fluide pour assurer un déplacement en extension des tiges 105, 115.

Dans une deuxième position de travail, le distributeur 170 alimente les chambres auxiliaires 108, 118 des vérins 100, 110 pour assurer la rétractation des tiges 105, 115.

Pour ce faire, des entrées des distributeurs 170 sont reliées respectivement d'une part à la ligne 132 reliée à la sortie des moyens formant source de pression 130 et d'autre part, à une ligne 194 communiquant avec le réservoir 140.

Le distributeur 170 comprend par ailleurs des sorties destinées à être reliées respectivement à la ligne 122 conduisant aux chambres auxiliaires 108, 118 et à la ligne 120 conduisant aux chambres principales 106, 116.

Par construction, le distributeur hydraulique 170 utilisé pour assurer l'interface entre les sources de pression 130 et les chambres des vérins 100, 110 sont limitées à un débit maximal pour la pression maximale.

On aperçoit par ailleurs sur les figures 2, 3 et 4 annexées des valves 180, 190. Les valves 180, 190 sont adaptées pour permettre d'injecter un débit de fluide dans les vérins 100, 110, en parallèle du distributeur 170 et ainsi augmenter le débit d'alimentation des vérins 100, 110 pour permettre de passer le reste de débit que le distributeur 170 ne peut par construction pas passer.

La valve 180 assure l'alimentation en pression des vérins 100 et 110. La valve 190 assure le retour du fluide vers le réservoir 140.

Les valves 180, 190 sont formées typiquement de valves 2 voies/2 positions.

Dans une position passante, les valves 180, 190 laissent passer un fluide. Dans une position fermée, elles interrompent au contraire ce fluide.

Une première valve 180 est reliée entre la sortie des moyens formant source de pression 130, par une ligne 182, et les chambres auxiliaires des vérins, c'est-à-dire la ligne 122, par l'intermédiaire d'une ligne 184.

La seconde valve 190 est montée entre les chambres principales 106, 116 des vérins, par l'intermédiaire d'une ligne 192, et le réservoir 140, par l'intermédiaire d'une ligne 194.

La ligne 194 est de préférence équipée d'un filtre 196.

Plus précisément encore, les valves 180, 190 sont reliées aux lignes 122, 120 conduisant respectivement aux chambres auxiliaires 108, 118 et aux chambres principales 106, 116 par l'intermédiaire d'un module 200 assurant une fonction d'équilibrage.

La source de pression 130 est formée de préférence d'une pompe hydraulique dont l'arbre d'entrée est entraîné par une prise de mouvement disponible sur le véhicule porteur, de préférence une prise de mouvement actionnée par le moteur du véhicule, par exemple un moteur thermique.

Selon le premier mode de réalisation représenté sur la figure 2, la source de pression 130 est formée d'une pompe à cylindrée fixe, mais dont le débit peut être modulé en variant la vitesse de rotation de la pompe.

A titre d'exemple non limitatif, la pompe 130 peut ainsi par exemple être commutée entre un régime de débit à 110 litres par minute à 310 bars maxi pour un déplacement standard et un régime à 160 litres minimum par minute à 100 bars maxi pour une phase de retour bennage rapide.

Selon le premier mode de réalisation représenté sur la figure 2, le capteur de pression 150 est monté sur la ligne 132. Il contrôle le fonctionnement de la pompe 130 en fonction de la pression régnant sur la ligne 132 et limite le débit de la pompe 130 lorsque la pression sur la ligne 132 dépasse un seuil, par exemple supérieur à 100 bars, en régime haut de débit sélectionné.

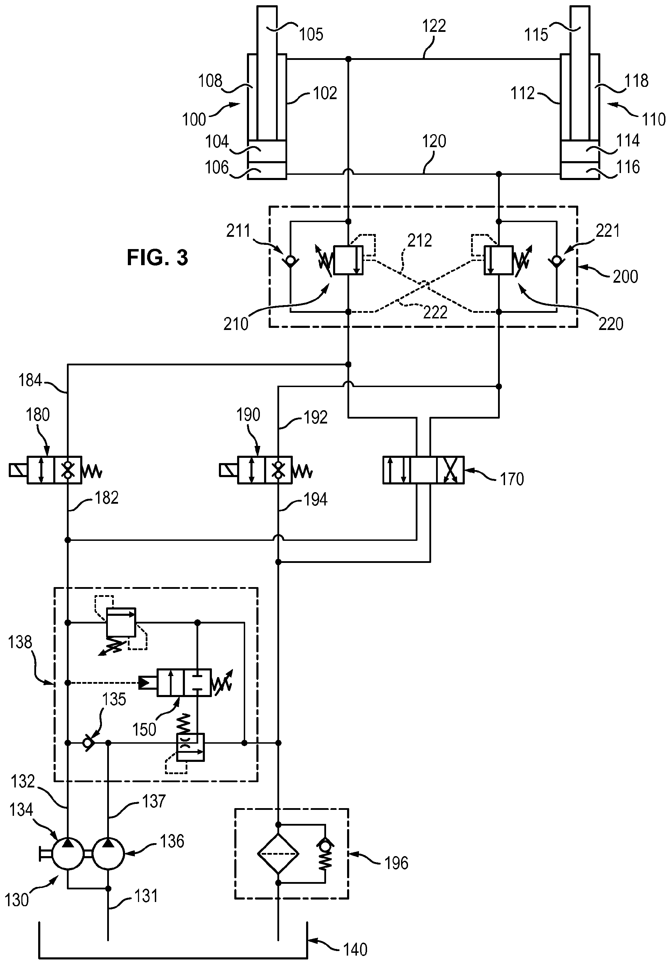

Selon le deuxième mode de réalisation du schéma hydraulique conforme à l'invention représenté sur la figure 3, la source de pression 130 est formée d'une pompe à deux cellules de cylindrée fixe générant un double débit.

Il peut s'agir par exemple d'une pompe délivrant deux débits de 80 litres par minute à 1000 tours par minute.

Cependant, l'invention n'est pas limitée à ce mode de réalisation. La source de pression 130 conforme au deuxième mode de réalisation peut comprendre par exemple deux cellules délivrant des débits de 110 litres et 50 litres par minute respectivement.

La pompe 130 utilisée dans le second mode de réalisation de la figure 3 est conçue pour fonctionner à un régime moteur fixe.

Les deux cellules sont référencées 134, 136 sur la figure 3.

La sortie d'une cellule principale 134 est reliée à la ligne 132.

La sortie d'une cellule secondaire 136 est reliée via une ligne 137 à une valve 138 Haute pression - Basse pression adaptée pour s'ouvrir lorsqu'une pression supérieure à un seuil, par exemple supérieure à 100 bars, est présente sur la ligne de sortie commune aux deux cellules 134, 136.

Le limiteur de pression 150 est formé d'un limiteur hydraulique disposé entre la ligne 137 et le réservoir 140 et adapté pour s'ouvrir lorsque la pression sur la ligne 132 est supérieure à un seuil, afin de ne pas dépasser une pression maximale sur cette ligne, en régime haut de débit sélectionné.

La ligne 132 est reliée à la ligne 137 via à un clapet anti-retour 135 passant dans le sens de la ligne 137 vers la ligne 132.

L'homme de l'art comprendra que l'utilisation d'une pompe 130 à double débit permet d'augmenter le débit par rapport à une pompe simple. L'association avec les valves 180, 190 permet d'augmenter le débit du distributeur 170 afin de limiter les pertes de charge.

La pompe double 130 est dimensionnée pour son premier étage comme des pompes simples classiques utilisées sur des véhicules. Cependant selon le deuxième mode de réalisation il y est ajouté un deuxième étage 136 qui n'est utilisé qu'à pression réduite.

Le couple maximal de la prise de mouvement et le couple sur l'arbre principal de la pompe 130 peuvent donc correspondre au couple engendré par le premier étage de la pompe à pleine pression. Lors de l'utilisation du plein débit qui cumule les débits du premier étage 134 et du deuxième étage 136, la pression est limitée par le limiteur de pression 150. Cette pression réduite est suffisante étant donné que la charge est alors entraînante.

Lors de l'utilisation en pression haute (par exemple de l'ordre de 310 bars) seul le premier étage 134 de la pompe est utilisé. Dans cette phase le deuxième étage 136 est directement relié au réservoir 140 par la valve 138.

Pour la phase de rentrée vérin rapide, les deux étages 134, 136 de la pompe 130 sont utilisés, mais le limiteur de pression 150 permet d'éviter de dépasser une pression basse (typiquement de l'ordre de 100 bars).

Les deux valves 180, 190 sont calibrées pour un débit demandé et sont alors activées pour augmenter le débit vers les vérins 100, 110 et assurer le retour au réservoir 140.

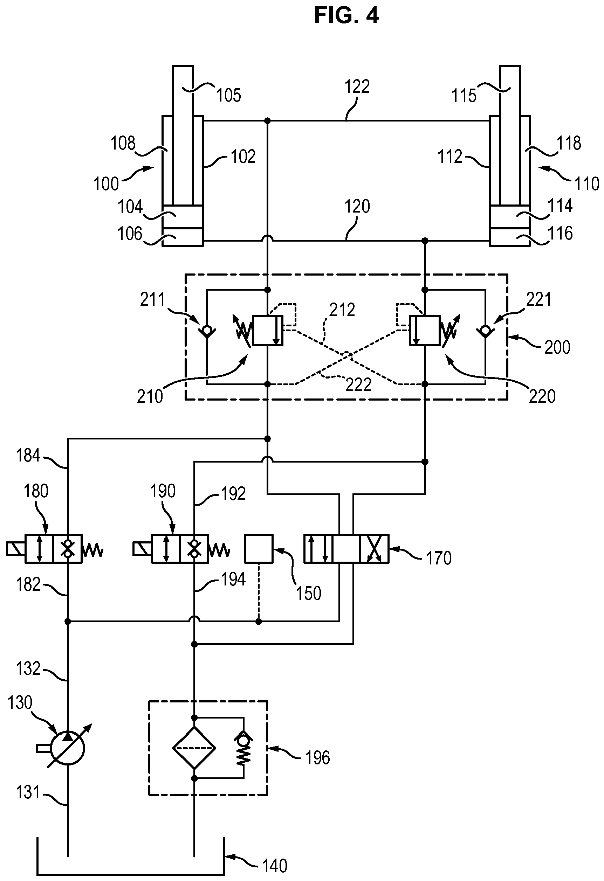

Selon le troisième mode de réalisation représenté sur la figure 4, la source de pression 130 est formée d'une pompe hydraulique à cylindrée variable pour délivrer un débit variable.

A titre d'exemple non limitatif, il peut s'agir d'une pompe 130 pilotée sélectivement entre un régime bas de 1000 tours par minute et un signal bas débit correspondant à un débit de 110 litres par minute à 310 bars maxi et un régime haut de 1250 tours par minute et un signal haut débit correspondant à 160 litres par minute à 100 bars maxi.

Le premier régime bas débit de 1000 tours et 110 litres par minute peut être sélectionné pour des alimentations et déplacements des vérins 100, 110 en dehors d'une phase de retour bennage rapide.

Le régime haut débit de 1250 tours par minute et 160 litres par minute à 100 bars maxi, est sélectionné pour les phases de retour bennage rapide.

La sortie de la pompe 130 est reliée, par une ligne 132, à l'entrée de la valve 180 via la ligne 182.

La sortie 132 de la pompe 130 est reliée par ailleurs à une entrée du distributeur 170 de sorte que selon la disposition du distributeur 170, dans une première position de travail du distributeur 170 la sortie de la pompe 130 est reliée aux chambres auxiliaires 108, 118 d'une part, par l'intermédiaire du module 200 et d'autre part, en parallèle par l'intermédiaire de la valve 180, tandis que dans une deuxième position de travail du distributeur 170 la sortie 132 de la pompe 130 est reliée aux chambres principales 106, 116.

Selon le troisième mode de réalisation représenté sur la figure 4, le capteur de pression 150 surveille la pression sur la ligne 132 et interrompt l'alimentation de la pompe 130 quand la pression sur sa ligne de sortie 132 dépasse un seuil, par exemple supérieur à 100 bars, en régime haut de débit sélectionné.

Le module 200 a pour fonction de maintenir la pression dans les chambres des vérins 100, 110, et de contrôler le débit. La présente invention permet de conserver cette fonction de sécurité, en gardant le contrôle de la charge, même dans le cas d'une charge entraînante.

Le module 200 peut faire l'objet de plusieurs modes de réalisation. Selon le mode de réalisation illustré sur les figures 2, 3 et 4, le module 200 est formé de deux limiteurs de pression pilotés 210, 220 comprenant un clapet anti retour parallèle 211, 221 passant en direction des vérins 100, 110, disposés respectivement sur les lignes reliant les sorties du distributeur 170 et les chambres des vérins 100, 110.

L'ensemble comprenant le limiteur de pression 210 et le clapet antiretour parallèle 211 est placé entre l'une des sorties du distributeur 170 et les chambres 108 et 118. Le limiteur de pression 210 est piloté via une ligne 212 par la pression prélevée au niveau de la liaison entre le limiteur 220 et le distributeur 170, qui correspond à la pression qui règne dans les chambres 106 et 116. Ainsi le limiteur de pression 210 qui assure l'alimentation des chambres 108, 118 n'est passant que s'il existe une pression dans les chambres 106 et 116.

Symétriquement l'ensemble comprenant le limiteur de pression 220 et le clapet antiretour parallèle 221 est placé entre l'autre sortie du distributeur 170 et les chambres 106 et 116. Le limiteur de pression 220 est piloté via une ligne 222 par la pression prélevée au niveau de la liaison entre le limiteur 210 et le distributeur 170, qui correspond à la pression qui règne dans les chambres 108 et 118. Ainsi le limiteur de pression 220 qui assure l'alimentation des chambres 106, 116 n'est passant que s'il existe une pression dans les chambres 108 et 118.

Les clapets anti-retour 211 et 221 permettent le contournement des limiteurs de pression 210 et 220 pour assurer les alimentations des vérins.

Le module 200 permet ainsi d'éviter l'entrainement des vérins par la charge associée puisqu'il limite l'alimentation des chambres du vérin lorsque l'une desdites chambres tend à être en dépression.

Comme on l'a indiqué précédemment, l'invention s'applique notamment aux phases de retour bennage rapide. Elle peut également être utilisée pour d'autres mouvements que le retour bennage.

Bien entendu la présente invention n'est pas limitée aux modes de réalisation qui viennent d'être décrits mais s'étend à toutes variantes conformes à son esprit.

## Revendications

1. Dispositif de levage destiné à être placé sur un châssis et comprenant une potence (12) actionnée par au moins un vérin hydraulique (100, 110) alimenté par l'intermédiaire de moyens de commande par une source de pression (130) pour opérer successivement un chargement ou bennage et un déchargement ou retour bennage, **caractérisé par le fait que** la source de pression (130) est adaptée pour générer sélectivement deux débits d'alimentation du vérin (100, 110), des moyens pour permettre de sélectionner sélectivement un régime de débit élevé lors d'une phase de retour bennage et qu'il comprend des moyens (150) formant limiteur de pression en sortie de la source de pression (130), actifs lors de l'application du régime de débit le plus élevé, ainsi qu'un module (200) assurant une fonction d'équilibrage et de maintien de la charge entraînante.

2. Dispositif selon la revendication 1, **caractérisé par le fait qu'**il comprend deux vérins (100, 110) connectés hydrauliquement en parallèle.

3. Dispositif selon l'une des revendications 1 ou 2, **caractérisé par le fait qu'**il comprend un distributeur (170) commutable entre trois positions, une position d'interruption d'alimentation des vérins (100, 110), une première position de travail assurant l'actionnement des vérins (100, 110) dans un premier sens, une deuxième position de travail assurant l'alimentation des vérins (100, 110) dans le sens opposé et des moyens (180, 190) adaptés pour permettre de passer un débit en parallèle du distributeur (170).

4. Dispositif selon la revendication 3, **caractérisé par le fait que** les moyens adaptés pour permettre de passer un débit en parallèle du distributeur (170) sont formés de deux valves (180, 190) deux voies/deux positions disposées respectivement sur une ligne aller (132) en sortie de la source de pression (130) et sur une ligne de retour (194) reliée à un réservoir (140).

5. Dispositif selon l'une des revendications 1 à 4, **caractérisé par le fait que** le module (200) assurant une fonction d'équilibrage et de maintien de la charge entraînante comprend deux limiteurs de pression (210, 220) reliés respectivement à une chambre (108, 118; 106, 116) du vérin et pilotés respectivement par la pression régnant dans l'autre chambre (106, 116; 108, 118) du vérin et un clapet antiretour (211, 221) placé en parallèle de chaque limiteur de pression (210, 220).

6. Dispositif selon l'une des revendications 1 à 5, **caractérisé par le fait que** la source de pression (130) est formée d'une pompe à cylindrée fixe et débits variables en fonction de sa vitesse de rotation.

7. Dispositif selon l'une des revendications 1 à 5, **caractérisé par le fait que** la source de pression est formée d'une pompe à double cellules de cylindrée fixe, correspondant à un double débit associé à des moyens de commutation (138) permettant de commuter le débit de sortie de l'une des cellules, soit vers les vérins (100, 110), soit vers un réservoir (140).

8. Dispositif selon l'une des revendications 1 à 5, **caractérisé par le fait que** la source de pression est formée d'une pompe (130) de cylindrée variable.

9. Dispositif selon l'une des revendications 1 à 8, **caractérisé par le fait que** le limiteur de pression (150) est formé d'un capteur de pression disposé sur la ligne de sortie (132) de la source de pression.

10. Dispositif selon l'une des revendications 1 à 8, **caractérisé par le fait que** le limiteur de pression (150) est formé d'un limiteur hydraulique de pression disposé entre la sortie de la source de pression (130) et un réservoir (140).

11. Véhicule équipé d'un dispositif de levage conforme à l'une des revendications 1 à 10.

12. Procédé de commande d'un dispositif de levage destiné à être placé sur un châssis et comprenant une potence (12) actionnée par au moins un vérin hydraulique (100, 110) alimenté par une source de pression (130), pour opérer successivement un chargement ou bennage et un déchargement ou retour bennage, **caractérisé par le fait qu'**il comprend des étapes consistant à sélectionner l'un de deux régimes de débit d'alimentation du vérin (100, 110) en sélectionnant sélectivement un régime de débit élevé lors d'une phase de retour bennage, à limiter la pression en sortie de la source de pression (130) lors de l'application du régime de débit le plus élevé et à opérer un contrôle de charge entraînante à l'aide d'un module (200) assurant une fonction d'équilibrage et de maintien de la charge entraînante.
